# EUROPÄISCHE PATENTSCHRIFT

(11) **EP 0 951 635 B1**
(45) Veröffentlichungstag und Bekanntmachung des Hinweises auf die Patenterteilung: **16.04.2003**
(21) Anmeldenummer: 98963318.5
(22) Anmeldetag: 05.11.1998
(51) Int. Cl.: G01D 3/028

(54) **SENSORENANORDNUNG BESTEHEND AUS SENSOR UND AUSWERTESCHALTUNG**
SENSOR ARRANGEMENT COMPRISING A SENSOR AND AN EVALUATION CIRCUIT
ENSEMBLE CAPTEUR COMPOSE D'UN CAPTEUR ET D'UN CIRCUIT D'EVALUATION

(30) Priorität: 12.11.1997 DE 19750049
(43) Veröffentlichungstag der Anmeldung: 27.10.1999
(73) Patentinhaber: ROBERT BOSCH GMBH, 70442 Stuttgart (DE)
(72) Erfinder: SEILS, Wolfgang, D-71640 Ludwigsburg (DE)
(86) Internationale Anmeldenummer: DE9803216
(87) Internationale Veröffentlichungsnummer: WO99024789

(56) Entgegenhaltungen:
- EP-A- 0 477 165
- US-A- 5 592 075

## Beschreibung

Die Erfindung betrifft eine Sensoranordnung bestehend aus einem Sensor und einer Auswerteschaltung zur Auswertung des Ausgangssignals des Sensors mit wenigstens einer an eine Betriebsspannung angeschlossene ersten Stromquelle, mittels welcher ein Strom durch den Sensor geleitet wird.

Es ist beispielsweise aus der EP 0 049 304 A1 bekannt, induktive Sensoren gleichzeitig zum Messen eines Weges oder einer Bewegung sowie der Temperatur einzusetzen. Dabei wird ein Sensor mit wenigstens einer Spule verwendet, die ihre elektrischen Eigenschaften in Abhängigkeit von der Meßgröße, beispielsweise von einer Verschiebung sowie von der herrschenden Temperatur verändert.

Bei der bekannten Anordnung wird ein induktives Abstandsmeßgerät mit einer Meßspule eingesetzt. Die Meßspule wird zum einen mit einem hochfrequenten Wechselstrom und zum anderen mit einem Gleichstrom oder einem niederfrequenten Strom beaufschlagt. Aus den induzierten Wirbelstromverlusten läßt sich die Impedanz der Spule und damit letztendlich die Lage der Meßspule bestimmen.
Aufgrund des ohmschen Widerstandes der Meßspule fällt an der Spule eine Spannung ab, die mit Hilfe eines Tiefpaßfilters zu einem Gleichspannungswert weiterverarbeitet wird. Da sich der ohmsche Widerstand der Meßspule mit der Temperatur ändert, ist der Spannungswert zugleich ein Maß für die Temperatur der Meßspule und kann zur Kompensation des eigentlichen Meßsignals herangezogen werden.

Aus der EP 0 332 196 B1 ist bekannt, einen Induktivsensor zur Messung der Drehzahl eines Rades in einer blockiergeschützten Fahrzeugbremsanlage einzusetzen. Die zugehörige Auswerteschaltung berücksichtigt dabei, daß die entsprechend der Drehzahl induzierten elektromagnetischen Signale sowohl in Amplitude als auch Frequenz mit der Drehzahl beträchtlich wachsen und sieht deshalb geeignete Kompensationsmaßnahmen vor. Weiterhin wird berücksichtigt, daß sich der Innenwiderstand des Drehzahlfühlers temperaturabhängig verändert.

Zur Erhöhung der Genauigkeit der Auswertung ist eine Temperaturkompensation vorgesehen, wobei vorgeschlagen wird, daß entweder die Temperatur des Drehzahlfühlers mit einem getrennten Sensor ermittelt wird oder daß vorab die Temperaturabhängigkeit des Innenwiderstandes des Drehzahlfühlers ermittelt und im auswertenden Mikroprozessor als Eichkurve abgespeichert wird. Die getrennte Messung von Drehzahl und Temperatur wird nicht vorgeschlagen. Es ist auch nicht bekannt, die Temperatur des Drehzahlfühlers als Maß für die Temperatur der Bremsen zu verwenden.

Darüber hinaus ist aus der DE 44 31 045 A1 eine eingangs beschriebene Sensoranordnung bekannt. Die bekannte Sensoranordnung dient zur gemeinsamen Messung zweier Größen, insbesondere der Drehzahl eines Rades und einer Temperatur mit einem induktiven Aufnehmer, der in der Nähe des Rades angeordnet ist und von diesem beeinflußt wird. Die zugehörige Auswerteschaltung ermittelt aus dem zeitlichen Abstand der Impulse des Ausgangssignals des induktiven Aufnehmers die Drehzahl. Die Temperatur wird aus dem auftretenden Spannungs-Offset ermittelt. Die Sensoranordnung wird als Raddrehzahlsensor in einem Kraftfahrzeug verwendet und ist in der Nähe der Bremsen angeordnet, wodurch eine von der Bremsentemperatur abhängige Temperatur gemessen beziehungsweise ausgewertet wird.

Wenngleich die bekannte Sensoranordnung auch sehr gute Ergebnisse liefert, so hat sie doch den Nachteil, daß ihre vorteilhafte Wirkung regelmäßig nur bei induktiven Sensoren, bei denen die Frequenz einer induzierten oder erzeugten Wechselspannung das Meßsignal darstellt, erreicht wird. Sie läßt sich daher in vorteilhafter Weise zwar dort einsetzen, wo das Meßsignal durch eine Schwingkreisverstimmung oder einen drehzahlabhängigen Fluß, wie dies in der DE 44 31 045 A1 der Fall ist, einsetzen. Wird das Meßsignal jedoch beispielsweise durch einen Kreuzspulenkraftsensor erzeugt, läßt sich die bekannte Sensoranordnung nicht einsetzen.

Desweiteren sind aus US-A-5 592 075 und EP-A-0 477 165 Sensoranordnungen bekannt, welche aus einem Sensor und einer Auswerteeinheit mit zwei konstantstrom-quellen bestehen, aber nicht die im Folgenden genannten Vorteile mit sich bringen.

Es ist Aufgabe der Erfindung eine eingangs beschriebene Sensoranordnung derart auszubilden, daß sie zur Auswertung von Meßsignalen verwendet werden kann, bei denen die Amplitude einer Wechselspannung das Meßsignal darstellt.

Die Lösung dieser Aufgabe ergibt sich aus den Merkmalen des Anspruchs 1. Vorteilhafte Weiterbildungen der Erfindung ergeben sich aus den Unteransprüchen.

Gemäß der Erfindung ist eine zweite Stromquelle vorgesehen, welche in Reihe mit der ersten Stromquelle geschaltet ist, wobei beide Stromquellen als Konstantstromquellen mit einem Steuereingang zur Einstellung des Konstantstromes ausgebildet sind, wobei ein Gegenkopplungsnetzwerk vorgesehen ist, mittels welchem der Konstantstrom so eingestellt wird, daß die Ausgangsspannungen der Stromquellen vorbestimmte Werte annehmen. Der so eingestellte Konstantstrom wird zur massefreien Messung des Sensorinnenwiderstandes verwendet.

Durch die zweite Stromquelle ist es in vorteilhafter Weise möglich, den Sensor zwischen den beiden Stromquellen anzuordnen. Da durch das Gegenkopplungsnetzwerk der Strom der Stromquellen eingestellt werden kann, können die Ausgangsspannungen der Stromquellen vorbestimmte Werte annehmen. Hierdurch läßt sich das Potential, auf dem der Sensor sein Signal abgibt, einstellen. Der Sensor befindet sich somit nicht mehr auf einem festen, sondern auf einem erdfrei, schwimmenden Potential. Durch die Potentialfreiheit wird der große Vorteil erreicht, daß sich an einen Differenzverstärker, der das Sensorsignal verstärkt, gelangende Gleichtaktstörungen kompensieren lassen.

Durch das Gegenkopplungsnetzwerk wird zudem verhindert, daß die Stromquellen in die Sättigung gelangen, wodurch ihre Ausgänge entweder nahezu auf dem Potential der Betriebsspannung oder auf Massepotential liegen würden. Durch die interne Regelung des Gegenkopplungsnetzwerks hat die erfindungsgemäße Schaltungsanordnung neben der Möglichkeit der Gleichtaktstörungsunterdrückung auch noch eine bessere Konstanz des Stromes. Dies wirkt sich sehr günstig für eine genauere Temperaturmessung aus. Da der Sensor nicht einseitig auf Potential gezogen wird, können des weiteren Kurzschlußund Abrißerkennungen aktiv bleiben.

Insbesondere bei einem als Kreuzduktor realisierten Kraftsensor, dessen Sekundärspule auf die vorstehend beschriebene Weise ausgewertet werden kann, hat die erfindungsgemäße Sensoranordnung große Vorteile, da ein Kreuzduktor die Eigenschaft hat, bei einseitig fester Beschaltung eine geringe Empfindlichkeit aufzuweisen. Wäre die Primärseite des Kreuzduktors ebenfalls einseitig auf ein festes Potential gelegt, bestünde zusätzlich die Gefahr einer Verkopplung. Diese Nachteile werden bei einer erfindungsgemäß ausgebildeten Sensoranordnung vermieden.

Besonders günstig ist es, wenn das Gegenkopplungsnetzwerk so ausgelegt ist, daß der Wert der Ausgangsspannungen der Stromquellen etwa dem Wert der halben Betriebsspannung entspricht. Hierdurch ergibt sich ein sehr großer Regelbereich.

Als besonders günstig hat sich herausgestellt, daß das Gegenkopplungsnetzwerk die Ausgangsspannungen der Stromquellen jeweils auf einen Summationspunkt im Steuereingang der Stromquellen leitet. Hierdurch läßt sich die interne Regelung schaltungstechnisch besonders leicht realisieren. Des weiteren ist es sehr günstig, wenn das Gegenkopplungsnetzwerk einen Tiefpaß aufweist, dessen Grenzfrequenz unter beziehungsweise deutlich unter der Frequenz des vom Sensor gelieferten Wechselsignals liegt. Durch den Tiefpaß wird erreicht, daß das Gegenkopplungsnetzwerk nur die zur Steuerung der Stromquellen niederfrequenten Signalanteile an den Steuereingang der Stromquellen durchläßt und das höherfrequente Sensorsignal sperrt.

Weitere Merkmale und Vorteile der vorliegenden Erfindung ergeben sich aus der nachfolgenden Beschreibung eines besonderen Ausführungsbeispiels unter Bezugnahme auf die Zeichnung.

Es zeigt
Figur 1 eine erste Ausführungsform einer erfindungsgemäßen Sensoranordnung und
Figur 2 eine zweite Ausführungsform einer erfindungsgemäßen Sensoranordnung.

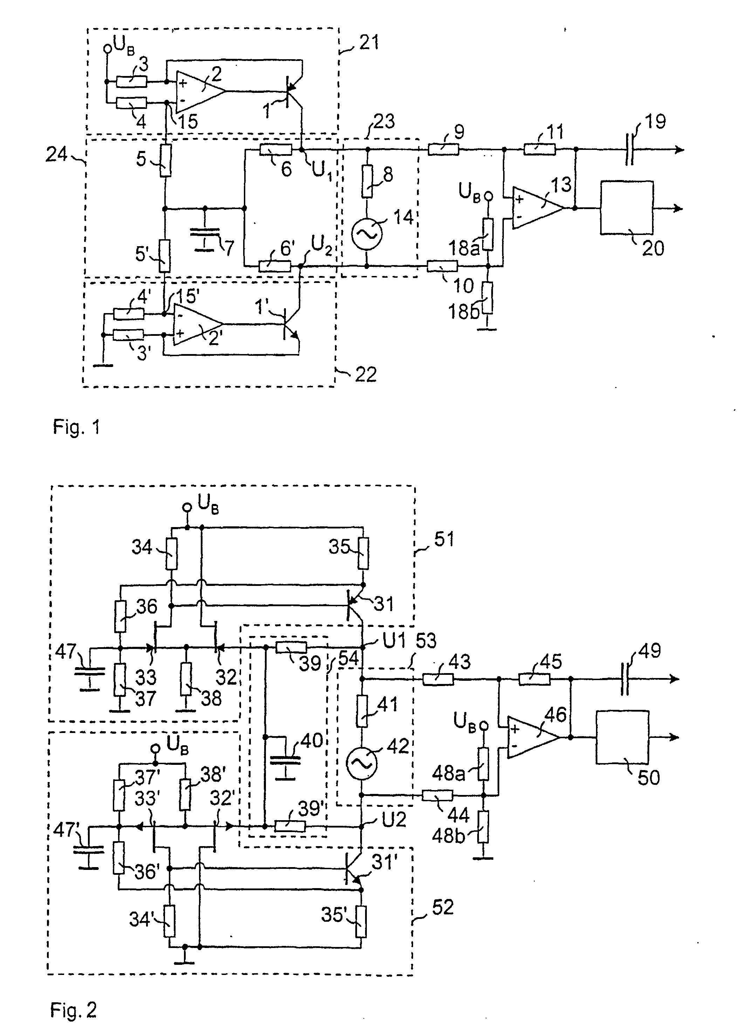

Wie der Figur 1 entnommen werden kann, besteht eine erfindungsgemäße Sensoranordnung aus zwei Stromquellen 21, 22 und einem Gegenkopplungsnetzwerk 24. Das Gegenkopplungsnetzwerk 24 dient zur Stabilisierung des Arbeitspunktes der Stromquellen 21, 22.

Die Stromquelle 21 besteht aus einem Transistor 1, einem Operationsverstärker 2, einem ersten Widerstand 3 und einem zweiten Widerstand 4. Der Ausgang des Operationsverstärkers 2 ist mit der Basis des Transistors 1 verbunden. Der Kollektor des Transistors 1 bildet den Ausgang der Stromquelle 21. Der Emitter des Transistors 1 ist mit dem invertierenden Eingang des Operationsverstärkers 2 verbunden. Der erste Widerstand 3 ist einerseits mit der Betriebsspannung UB verbunden und andererseits ebenfalls mit dem invertierenden Eingang des Operationsverstärkers 2. Der zweite Widerstand 4 ist einerseits mit der Eingangsspannung UB und andererseits mit dem nichtinvertierenden Eingang des Opertionsverstärkers 2 verbunden. Der nichtinvertierende Eingang des Operationsverstärkers 2 stellt einen Summationspunkt 15 dar.

Der Summationspunkt 15 bildet den Steuereingang der Stromquelle 21. Der nichtinvertierende Eingang des Operationsverstärkers 2 beziehungsweise der Summationspunkt 15 ist des weiteren mit einem dritten Widerstand 5 des Gegenkopplungsnetzwerks 24 verbunden. Das Gegenkopplungsnetzwerk 24 weist weiterhin einen vierten Widerstand 6, einen fünften Widerstand 5', einen sechsten Widerstand 6' und einen Kondensator 7 auf. Der vierte Widerstand 6 als auch der dritte Widerstand 5 beziehungsweise der sechste Widerstand 6' als auch der fünfte Widerstand 5' und der Kondensator 7 sind so bemessen, daß sie jeweils einen Tiefpaß bilden. Der dritte Widerstand 5 ist mit seinem nicht mit dem Summationspunkt 15 verbundenen Anschluß mit dem fünften Widerstand 5', dem Kondensator 7, dem vierten Widerstand 6 und dem sechsten Widerstand 6' verbunden. Der Kondensator 7 ist andererseits mit Massepotential verbunden. Der vierte Widerstand 6 ist andererseits mit dem Kollektor des Transistors 1 beziehungsweise mit dem Ausgang der ersten Stromquelle 21 verbunden.

Die zweite Stromquelle 22 ist komplementär zur ersten Stromquelle 21 aufgebaut und besteht aus einem weiteren Transistor 1', einem weiteren Operationsverstärker 2', einem weiteren ersten Widerstand 3' und einem weiteren zweiten Widerstand 4'. Statt eines pnp-Transistors 1 wird jedoch ein npn-Transistor 1' verwendet. Des weiteren ist der weitere erste Widerstand 3' und der weitere zweite Widerstand 4' einerseits nicht mit der Betriebsspannung UB sondern mit Massepotential verbunden. Der nichtinvertierende Eingang des weiteren Operationsverstärkers 2' stellt einen weiteren Summationspunkt 15' dar. Der weitere Summationspunkt 15' bildet den Steuereingang der zweiten Stromquelle 22. Der Steuereingang der zweiten Stromquelle 22 beziehungsweise der weitere Summationspunkt 15' ist mit dem nicht mit dem Kondensator 7 verbundenen Anschluß des fünften Widerstands 5' verbunden. Der Kollektor des weiteren Transistors 1' ist mit dem nicht mit dem Kondensator 7 verbundenen Anschluß des sechsten Widerstands 6' verbunden.
Der den Ausgang der ersten Stromquelle 21 bildende Kollektor des Transistors 1 ist mit einem ersten Anschluß einer Sekundärspule 23 eines Kreuzduktors verbunden. Der den Ausgang der zweiten Stromquelle 22 bildende Kollektor des weiteren Transistors 1' ist mit einem zweiten Anschluß des Kreuzduktors 23 verbunden. Der Kreuzduktor 23 ist ein induktiver Kraftsensor, welcher als aus einem Innenwiderstand 8 und einer Spannungsquelle 14 bestehend dargestellt werden kann. Der erste Anschluß des Kreuzduktors 23 ist des weiteren mit einem siebten Widerstand 9 verbunden, dessen anderer Anschluß mit dem invertierenden Eingang eines als Differenzverstärker geschalteten Operationsverstärkers 13 verbunden ist. Der zweite Anschluß des Kreuzduktors 23 ist mit einem achten Widerstand 10 verbunden, dessen anderer Anschluß mit dem nichtinvertierenden Eingang des als Differenzverstärker beschalteten Operationsverstärkers 13 verbunden ist. Zwischen dem Ausgang des Operationsverstärkers 13 und dem invertierenden Eingang des Operationsverstärkers 13 ist ein neunter Widerstand 11 geschaltet. Die am Ausgang des als Differenzverstärker beschalteten Operationsverstärker 13 anstehende Gleichspannung ist ein Maß für die Temperatur des Sensors 23 und kann über einen Tiefpaß 26 ausgewertet werden. Das Kraftsignal des Sensors, welches der Amplitude der Wechselspannung 42 entspricht, wird über einen Koppelkondensator 25 ausgekoppelt.

Da die erste Stromquelle 21 und die zweite Stromquelle 22 komplementär zueinander aufgebaut sind, wird die Funktionsweise der Schaltung anhand der ersten Stromquelle 21 beschrieben.

Über den zweiten Widerstand 4 und den dritten Widerstand 5 fließt ein Strom in den Summationspunkt 15. Hierdurch ergibt sich am zweiten Widerstand 4 ein bestimmter Spannungsabfall. Der am zweiten Widerstand 4 anstehende Spannungsabfall wird mit dem am ersten Widerstand 3 anstehenden Spannungsabfall durch den Operationsverstärker 2 verglichen, wodurch im Transistor 1 ein bestimmter Kollektorstrom eingestellt wird.

Der mit dem ersten Eingang des Kreuzduktros 23 verbundene Kollektor des Transistors 1 soll auf einem Spannungspotential von etwa der halben Betriebsspannung UB gehalten werden. Hierzu wird die am Kollektor anstehende Spannung U1 über den vierten Widerstand 6 und den dritten Widerstand 5 auf den Summationspunkt 15 der ersten Stromquelle 21 zurückgeführt. Die Spannung wird durch den Kondensator 7 geglättet, so daß Anteile der Spannungsquelle 14 des Kreuzduktors 23 sowie Störspannungen herausgefiltert werden.

Der mittels der ersten Stromquelle 21 beziehungsweise der zweiten Stromquelle 22 durch den Kreuzduktor 23 geleitete Strom erzeugt an dem Innenwiderstand 8 einen Spannungsabfall. Der Spannungsabfall hängt von der Größe des Innenwiderstands 8 ab. Ändert sich der Innenwiderstand 8, so ändert sich auch der an ihm erzeugte Spannungsabfall.

Der Spannungsabfall am Innenwiderstand 8 des Kreuzduktors 23 wird durch den als Differenzverstärker geschalteten Operationsverstärker 13 verstärkt. Der Gleichspannungsanteil des Ausgangssignals des als Differenzverstärker geschalteten Operationsverstärkers 13 stellt somit ein Maß für den Innenwiderstand 8 des Kreuzduktors 23 dar.

Somit kann der Innenwiderstand 8 des Kreuzduktors 23 mittels des als Differenzverstärker geschalteten Operationsverstärkers 13 über einen Tiefpaß gemessen werden. Gleichzeitig kann die im Kreuzduktor 23, als Spannungsquelle 14 dargestellte, induzierte Wechselspannung über einen Kondensator gemessen werden, ohne daß die aus den beiden Stromquellen 21, 22 gebildete schwimmende Stromquelle das Signal wesentlich verfälscht.

Die in der Figur 2 dargestellte zweite Ausführungsform einer erfindungsgemäßen Sensoranordnung ist eine Variante der in der Figur 1 dargestellten Ausführungsform. Die Sensoranordnung besteht aus zwei Stromquellen 51, 52 und einem Gegenkopplungsnetzwerk 54. Das Gegenkopplungsnetzwerk 54 dient zur Stabilisierung des Arbeitspunktes der Stromquellen 51, 54.

Die Stromquelle 51 besteht aus einem ersten Transistor 31, einem Transistor 32, einem dritten Transistor 33, einem ersten Widerstand 34, einem zweiten Widerstand 35, einem dritten Widerstand 36, einem vierten Widerstand 37, einem fünften Widerstand 38 und einem ersten Kondensator 47. Der erste Transistor 31 ist ein pnp-Transistor, der zweite Transistor 32 und der dritte Transistor 33 sind Sperrschicht-Feldeffekttransistoren. Der zweite Transistor 32 und der dritte Transistor 33 sind als Differenzverstärker geschaltet. Der Drainanschluß des dritten Transistors 33, der den Ausgang des Differenzverstärkers bildet, ist mit der Basis des ersten Transistors 31 verbunden. Der Kollektor des ersten Transistors 31 bildet den Ausgang der ersten Stromquelle 51.

Die Source-Anschlüsse des zweiten Transistors 32 und des dritten Transistors 33 sind miteinander verbunden und über den fünften Widerstand 38 auf Massepotential gelegt. Der Drainanschluß des zweiten Transistors 32 ist des weiteren über den ersten Widerstand 34 mit der Betriebsspannung UB verbunden. Der Drainanschluß des zweiten Transistors 32 ist direkt mit der Betriebsspannung UB verbunden. Der Emitter des ersten Transistors 31 ist über den zweiten Widerstand 35 mit der Betriebsspannung UB verbunden. Des weiteren ist der Emitter des ersten Transistors 31 über den dritten Widerstand 36 und den vierten Widerstand 37 mit Massepotential verbunden. Der dritte Widerstand 36 und der vierte Widerstand 37 bilden einen Spannungsteiler. Mit dem Mittenabgriff des aus dem dritten Widerstand 36 und dem vierten Widerstand 37 gebildeten Spannungsteilers ist zum einen der Gate-Anschluß des dritten Transistors 33 und zum anderen der erste Kondensator 47 einerseits verbunden. Andererseits ist der erste Kondensator 47 mit Masse verbunden.

Die zweite Stromquelle 52 ist komplementär zur ersten Stromquelle 51 aufgebaut und besteht aus einem weiteren ersten Transistor 31' einem weiteren zweiten Transistor 32', einem weiteren dritten Transistor 33' sowie weiteren ersten bis fünften Widerständen 34' bis 38' und einem weiteren ersten Kondensator 47'. Statt eines pnp-Transistors 31 wird jedoch ein npn-Transistor 31' verwendet. Statt n-Kanal-Transistoren 32, 33 werden p-Kanal-Transistoren 32', 33' verwendet. Des weiteren ist der Drain-Anschluß des weiteren zweiten Transistors 31' sowie sind die weiteren ersten und zweiten Widerstände 34', 35' nicht mit der Betriebsspannung UB verbunden sondern mit Masse.

Der den Ausgang der ersten Stromquelle 51 bildende Kollektor des ersten Transistors 31 ist mit einem ersten Anschluß des Sensors 53 verbunden. Der den Ausgang der zweiten Stromquelle 52 bildende Kollektor des weiteren ersten Transistors 31' ist mit einem zweiten Anschluß des Sensors 52 verbunden. Der Sensor 53 ist ein induktiver Kraftsensor, welcher als aus einem Innenwiderstand 41 und einer Spannungsquelle 42 bestehend dargestellt werden kann. Die beiden Anschlüsse des Sensors 53 sind darüber hinaus mit den Eingängen eines als Differenzverstärker geschalteten Operationsverstärker 46 verbunden.

Die am Emitter des ersten Transistors 31 anstehende und über den aus dem dritten Widerstand 36 und dem vierten Widerstand 37 bestehenden Spannungsteiler auf den Gate-Anschluß des dritten Transistors 33 zurückgeführte Spannung dient zur Regelung des Ausgangsstromes der ersten Stromquelle 51. Das zurückgeführte Signal wird durch den ersten Kondensator 47 geglättet, wodurch ein instabiles Regelungsverhalten vermieden wird. Das aus einem sechsten Widerstand 39 als auch einem weiteren sechsten Widerstand 39' sowie einem zweiten Kondensator 40 bestehende Gegenkopplungsnetzwerk 54 hat die selbe Funktion wie in der ersten Ausführungsform. Die am Kollektor des ersten Transistors 31 anstehende Spannung U1 wird über den sechsten Widerstand 39 auf den Gate-Anschluß des zweiten Transistors 32 zurückgeführt. Der ebenfalls mit dem Gate-Anschluß des zweiten Transistors 32 verbundene zweite Kondensator 40 dient zur Glättung der zurückgeführten Spannung, so daß Anteile der Spannungsquelle 42 des Sensors 53 sowie Störspannungen herausgefiltert werden.

Die am Innenwiderstand 41 des Sensors 53 abfallende Spannung wird durch den als Differenzverstärker geschalteten Operationsverstärker 46 verstärkt. Der Gleichanteil des Ausgangssignals des Operationsverstärkers 46 stellt somit ein Maß für den Innenwiderstand 41 des Sensors 53 dar und kann über einen Tiefpaß gemessen werden. Der Wechselanteil des Ausgangssignals des Operationsverstärkers 46 ist das eigentliche Sensorsignal und kann über einen Koppelkondensator gemessen werden. Damit ist eine unabhängige Messung zweier Größen möglich.

## Patentansprüche

1. Sensoranordnung bestehend aus einem Sensor (23; 53) und einer Auswerteschaltung zur Auswertung des Ausgangssignals des Sensors (23; 53) mit wenigstens einer an eine Betriebsspannung (UB) angeschlossene ersten Stromquelle (21; 51), mittels welcher ein Strom durch den Sensor (23; 53) geleitet wird, mit
einer zweiten Stromquelle (22; 52), welche in Reihe mit der ersten Stromquelle (21; 51) geschaltet ist, wobei beide Stromquellen (21, 22; 51, 52) als Konstantstromquellen mit einem Steuereingang zur Einstellung des Konstantstromes ausgebildet sind, und ein Gegenkopplungsnetzwerk (24; 54) vorgesehen ist, mittels welchem der Konstantstrom so eingestellt wird, daß die Ausgangsspannungen (U1, U2) der Stromquellen (21, 22; 51, 52) vorbestimmte Werte annehmen, und der so eingestellte Konstantstrom zur massefreien Messung des Sensorinnenwiderstandes (8, 41) verwen-det wird.

2. Sensoranordnung nach Anspruch 1, wobei
das Gegenkopplungsnetzwerk (24;54) so ausgelegt ist, daß der Wert der Ausgangsspannungen (U1, U2) etwa die halbe Betriebsspannung (UB) beträgt.

3. Sensoranordnung nach Anspruch 1 oder 2,
wobei
das Gegenkopplungsnetzwerk (24; 54) die Ausgangsspannungen (U1, U2) der Stromquellen (21, 22; 51, 52) jeweils auf einen Summationspunkt (15, 15') im Steuereingang der Stromquellen (21, 22; 51, 52) leitet.

4. Sensoranordnung nach einem der Ansprüche 1 bis 3,
wobei
das Gegenkopplungsnetzwerk (24; 54) einen Tiefpaß (6, 6', 7; 39', 40) aufweist, dessen Grenzfrequenz unter der Frequenz der vom Sensor gelieferten Wechselspannung liegt.

5. Sensoranordnung nach einem der Ansprüche 1 bis 4,
wobei
der Sensor (23; 53) ein Sensor ist, dessen Ausgangssignal eine Wechselspannung ist, die eine der zu erfassenden Größe entsprechende Amplitude aufweist und dessen Innenwiderstand von der Temperatur abhängt.

6. Sensoranordnung nach einem der Ansprüche 1 bis 5,
wobei
der Sensor (23; 53) ein induktiver Kraftsensor ist, dessen Sekundärspule (23, 53) auf die vorstehend beschriebene Weise ausgewertet werden kann.

## Claims

1. Sensor arrangement comprising a sensor (23; 53) and an evaluation circuit for evaluating the output signal of the sensor (23; 53) with at least one first current source (21; 51), which is connected to an operating voltage (UB) and by means of which a current is conducted through the sensor (23; 53),
with a second current source (22; 52), which is connected in series with the first current source (21; 51), in which case the two current sources (21, 22; 51, 52) are designed as constant-current sources with a control input for setting the constant current, and a negative feedback network (24; 54) is provided, by means of which the constant current is set in such a way that the output voltages (U1, U2) of the current sources (21, 22; 51, 52) assume predetermined values, and the constant current thus set is used for earth-free measurement of the sensor internal resistance (8, 41).

2. Sensor arrangement according to Claim 1, in which case the negative feedback network (24; 54) is designed in such a way that the value of the output voltages (U1, U2) amounts to about half the operating voltage (UB).

3. Sensor arrangement according to Claim 1 or 2, in which case the negative feedback network (24; 54) conducts the output voltages (U1, U2) of the current sources (21, 22; 51, 52) in each case to a summation point (15, 15') in the control input of the current sources (21, 22; 51, 52).

4. Sensor arrangement according to one of Claims 1 to 3, in which case the negative feedback network (24; 54) has a low-pass filter (6, 6', 7; 39', 40), whose limiting frequency lies below the frequency of the AC voltage supplied by the sensor.

5. Sensor arrangement according to one of Claims 1 to 4, in which case the sensor (23; 53) is a sensor whose output signal is an AC voltage which has an amplitude corresponding to the quantity to be detected and whose internal resistance depends on the temperature.

6. Sensor arrangement according to one of Claims 1 to 5, in which case the sensor (23; 53) is an inductive force sensor whose secondary coil (23, 53) can be evaluated in the manner described above.

## Revendications

1. Dispositif de capteur formé d'un capteur (23 ; 53) et d'un circuit d'exploitation pour traiter le signal de sortie du capteur (23 ; 53) comprenant au moins une première source de courant (21 ; 51) reliée à une tension de fonctionnement UB et qui envoie un courant dans le capteur (23 ; 53), avec
une seconde source de courant (22 ; 52) en série avec la première source de courant (21 ;51),
dans lequel
les deux sources de courant (21, 22 ; 51, 52) sont des sources de courant constant avec une entrée de commande pour régler le courant constant, et il est prévu
un réseau de contre-couplage (24 ; 54) à l'aide duquel on règle le courant constant pour que les tensions de sortie (U1, U2) des sources de courant (21, 22 ; 51, 52) prennent des valeurs prédéterminées, et le courant constant ainsi réglé est utilisé pour la mesure sans masse de la résistance interne du capteur (8 ; 41).

2. Dispositif de capteur selon la revendication 1,
dans lequel
le réseau de contre-couplage (24 ; 54) est conçu pour que la valeur des tensions de sortie (U1, U2) corresponde sensiblement à la moitié de la tension de fonctionnement (UB).

3. Dispositif de capteur selon les revendications 1 ou 2,
dans lequel
le réseau de contre-couplage (24 ; 54) applique la tension de sortie (U1, U2) des sources de courant (21, 22 ; 51, 52) chaque fois à un point de sommation (15, 15') à l'entrée de commande des sources de courant (21, 22 ; 51, 52).

4. Dispositif de capteur selon l'une des revendications 1 à 3,
dans lequel
le réseau de contre-couplage (24 ; 54) comporte un filtre passe-bas (6, 6', 7 ; 39', 40) dont la fréquence limite est inférieure à la fréquence de la tension alternative fournie par le capteur.

5. Dispositif de capteur selon l'une des revendications 1 à 4,
**caractérisé en ce que**
le capteur (23 ; 53) est un capteur dont le signal de sortie est une tension alternative présentant une amplitude correspondant à la grandeur à saisir et dont la résistance interne dépend de la température.

6. Dispositif de capteur selon l'une des revendications 1 à 5,
**caractérisé en ce que**
le capteur (23 ; 53) est un capteur dynamométrique inductif dont les bobines secondaires (23 ; 53) sont exploitées comme décrit ci-dessus.
